# EUROPEAN PATENT APPLICATION

(11) **EP 4 626 077 A1**
(43) Date of publication of application: **01.10.2025**
(21) Application number: 23902334.4
(22) Date of filing: 31.10.2023
(51) Int. Cl.: H04W 36/06

(54) **CHANNEL SWITCHING METHOD AND APPARATUS**

(30) Priority: 16.12.2022 CN 202211627754
(71) Applicant: Huawei Technologies Co., Ltd., Shenzhen, Guangdong 518129 (CN)
(72) Inventor: MA, Yunsi, Shenzhen, Guangdong 518129 (CN); RUAN, Wei, Shenzhen, Guangdong 518129 (CN)
(74) Representative: Isarpatent
(86) International application number: PCT/CN2023/128338
(87) International publication number: WO 2024/125134

(57) **Abstract**

This application relates to the field of channel switching technologies, and discloses a channel switching method and an apparatus, used in a Wi-Fi device. In the method, a first device generates a first frame, where the first frame includes first information, the first information indicates a running mode parameter, the running mode parameter is determined based on a first signal transmitted on a first channel, and the first signal is a non-Wi-Fi signal; and the first device sends the first frame to a second device. According to the method, the first device and the second device may switch a running mode based on the running mode parameter determined based on the non-Wi-Fi signal, so that interference of the non-Wi-Fi signal can be avoided, and data transmission efficiency can be improved.

## Description

### CROSS-REFERENCE TO RELATED APPLICATIONS

This application claims priority to Chinese Patent Application No. 202211627754.0, filed with the China National Intellectual Property Administration on December 16, 2022 and entitled "CHANNEL SWITCHING METHOD AND APPARATUS", which is incorporated herein by reference in its entirety.

### TECHNICAL FIELD

This application relates to the field of channel switching technologies, and in particular, to a channel switching method and an apparatus.

### BACKGROUND

Currently, before accessing a radar channel, an access point (access point, AP) in a wireless local area network (wireless local area network, WLAN) needs to scan for and listen to a radar signal for a period of time, to ensure that the access point can access the radar channel only after the radar channel is idle. When detecting that there is the radar signal on the radar channel, the access point performs dynamic frequency selection (dynamic frequency selection, DFS), to avoid the radar signal, and prevent communication of the access point from being interfered by the radar signal.

After performing a DFS mechanism, the AP usually sends a channel switch announcement (channel switch announcement, CSA), to indicate a station (station, STA) to switch an operating channel. However, when performing channel switching based on the CSA, the STA interrupts sending of a current service until channel switching is completed. Consequently, in a current channel switching method, there are problems that data transmission efficiency is low and service transmission quality of the STA cannot be ensured.

### SUMMARY

This application provides a channel switching method and an apparatus, to avoid a non-Wi-Fi signal, and improve data transmission efficiency.

According to a first aspect, an embodiment of this application provides a channel switching method. The method may be applied to a first device. The method includes: The first device generates a first frame, where the first frame includes first information, the first information indicates the running mode parameter, the running mode parameter is determined based on a first signal operating on a first channel, and the first signal is a non-Wi-Fi signal; and the first device sends the first frame to a second device.

According to the method, running mode parameters of the first device and the second device are determined based on the non-Wi-Fi signal on the first channel. In comparison with directly switching a running mode when the non-Wi-Fi signal is detected, the first device and the second device switch the running mode based on the non-Wi-Fi signal, so that interference of a Wi-Fi signal to the non-Wi-Fi signal and interference of the non-Wi-Fi signal to the Wi-Fi signal can be avoided, and data transmission efficiency can be improved.

In a possible design, the running mode parameter is determined based on a bandwidth switching strategy, and the bandwidth switching strategy is determined based on signal strength of the first signal.

In this design, according to the bandwidth switching strategy determined by the first device based on the signal strength of the first signal, an optimal switching manner for a current status can be selected, so that data transmission efficiency can be ensured.

In a possible design, the running mode parameter includes at least one parameter of a channel switch mode, a channel number, a channel bandwidth, a signal bandwidth, and a primary channel number.

In this design, the first device and the second device may change the channel bandwidth and the signal bandwidth, and switch the running mode to a mode that adapts to the current status, so that data transmission efficiency can be ensured, and service transmission quality can be ensured.

In a possible design, the bandwidth switching strategy includes switching a first signal bandwidth to a second signal bandwidth, the first signal bandwidth is a signal bandwidth in which the first device operates on the first channel, and the second signal bandwidth is less than the first signal bandwidth.

In this design, after the first device and the second device detect the non-Wi-Fi signal, the signal bandwidth can be reduced, so that the first device and the second device can transmit data while avoiding interference of the non-Wi-Fi signal, and data transmission efficiency can be improved.

In a possible design, when the signal strength is greater than or equal to a first threshold, the bandwidth switching strategy further includes switching the first channel to a second channel, the second channel is a non-operating channel of the first signal, and a channel bandwidth of the second channel is less than a channel bandwidth of the first channel.

In this design, when the signal strength is excessively strong, the first device and the second device switch the channel to the non-operating channel whose channel bandwidth is less than that of the non-Wi-Fi signal of the first channel, so that interference of the non-Wi-Fi signal can be effectively avoided.

In a possible design, when the signal strength is less than a first threshold, and a primary channel of the first device is an operating channel of the first signal, the bandwidth switching strategy further includes switching a frequency or a channel number of the primary channel to that of a non-operating channel of the first signal.

In this design, when signal strength of the non-Wi-Fi signal is less than the first threshold, the first device and the second device switch the primary channel to the non-operating channel of the non-Wi-Fi signal, so that the first device and the second device do not switch the operating channel, and only by reducing a transmission signal bandwidth, the first device and the second device can be prevented from transmitting data on the operating channel of the non-Wi-Fi signal while a purpose of quickly switching the running mode parameters of the first device and the second device is achieved.

In a possible design, the first device sends the first frame to the second device in a unicast manner or a broadcast manner.

In a possible design, after sending the first frame to the second device, the first device generates a second frame, where the second frame includes second information, the second information indicates the signal bandwidth or the channel bandwidth, the second information is determined based on a bandwidth recovery strategy, the bandwidth recovery strategy is determined based on signal strength of a second signal operating on the first channel, and the second signal is the non-Wi-Fi signal; and the first device sends the second frame to the second device.

In this design, after sending the first frame, the first device continues to monitor the non-Wi-Fi signal, and determines the bandwidth recovery strategy based on strength of the non-Wi-Fi signal, so that when the non-Wi-Fi signal changes, the signal bandwidth and the channel bandwidth of the first device and the second device can be recovered in time, and data transmission efficiency can be improved.

In a possible design, when the signal strength of the second signal is less than a second threshold, the bandwidth recovery strategy is switching a third channel to a fourth channel, the third channel is a channel on which the first device currently operates, and a channel bandwidth of the fourth channel is greater than a channel bandwidth of the third channel.

In this design, when the signal strength of the non-Wi-Fi signal decreases to the second threshold, the first device and the second device switch the channel bandwidth to a large channel bandwidth, so that data transmission efficiency can be improved.

In a possible design, when duration reaches specified time, the bandwidth recovery strategy is switching the second signal bandwidth to a third signal bandwidth, the duration is time that is calculated by the first device and in which the second signal is not continuously detected, and the second signal bandwidth is less than the third signal bandwidth.

In this design, after the non-Wi-Fi signal disappears, the first device and the second device switch the signal bandwidth to a large signal bandwidth, so that data transmission efficiency can be improved.

In a possible design, the first information and the second information include channel switch announcement CSA information or extended channel switch announcement information.

In a possible design, the first device is an access point AP, and the non-Wi-Fi signal is a radar signal.

According to a second aspect, an embodiment of this application provides a communication apparatus. The communication apparatus has a function for implementing the first aspect. For example, the communication apparatus includes a corresponding module, unit, or means (means) for performing an operation in the first aspect. The module, unit, or means may be implemented by software, or may be implemented by hardware, or may be implemented by hardware executing corresponding software.

In a possible design, the communication apparatus includes a processing unit and a communication unit. The communication unit may be configured to send or receive a signal, to implement communication between the communication apparatus and another apparatus. The processing unit may be configured to perform some internal operations of the communication apparatus. Functions performed by the processing unit and the communication unit may correspond to the operations in the first aspect.

In a possible design, the communication apparatus includes a processor, and the processor may be coupled to a memory. The memory may store a computer program or instructions necessary for implementing the functions in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and a memory. The memory may store a computer program or instructions necessary for implementing the functions in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and an interface circuit, and the processor is configured to: communicate with another apparatus through the interface circuit, and perform the method according to any one of the possible designs or implementations of the first aspect.

It may be understood that in the second aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into a same chip, or may be disposed on different chips. A type of the memory and a manner in which the memory and the processor are disposed are not limited in this embodiment of this application.

According to a third aspect, this application provides a computer-readable storage medium. The computer storage medium stores computer-readable instructions. When a computer reads and executes the computer-readable instructions, the computer is enabled to perform the method according to any one of the possible designs of the first aspect.

According to a fourth aspect, this application provides a computer program product. When a computer reads and executes the computer program product, the computer is enabled to perform the method according to any one of the possible designs of the first aspect.

According to a fifth aspect, this application provides a chip. The chip includes a processor. The processor is coupled to a memory, and is configured to read and execute a software program stored in the memory, to implement the method according to any one of the possible designs of the first aspect.

### BRIEF DESCRIPTION OF DRAWINGS

FIG. 1 is a diagram of a network architecture to which an embodiment of this application is applicable;
FIG. 2 is a diagram of a procedure corresponding to a channel switching method according to an embodiment of this application;
FIG. 3 is a diagram of a format of a CSA element according to an embodiment of this application;
FIG. 4 is a diagram of a format of a GCSA element according to an embodiment of this application;
FIG. 5 is a diagram of a format of another GCSA element according to an embodiment of this application;
FIG. 6 is a diagram of a frame format of a GCSA frame according to an embodiment of this application;
FIG. 7 is a diagram of a format of another GCSA element according to an embodiment of this application;
FIG. 8 is a diagram of a format of another GCSA element according to an embodiment of this application;
FIG. 9 is a diagram of a procedure corresponding to a bandwidth recovery method according to an embodiment of this application;
FIG. 10 is a diagram of a scenario corresponding to a channel switching method according to an embodiment of this application;
FIG. 11 is a diagram of a scenario corresponding to another channel switching method according to an embodiment of this application;
FIG. 12 is a possible example block diagram of an apparatus according to an embodiment of this application; and
FIG. 13 is a diagram of a structure of an AP according to an embodiment of this application.

### DESCRIPTION OF EMBODIMENTS

The following describes technical solutions in embodiments of this application with reference to accompanying drawings in embodiments of this application.

Embodiments of this application are applicable to a WLAN, for example, are applicable to any protocol in the Institute of Electrical and Electronics Engineers (institute of electrical and electronics engineers, IEEE) 802.11 series protocols currently used in the WLAN. The WLAN may include one or more basic service sets (basic service sets, BSSs), and a network node in the basic service set includes an access point (access point, AP) and a station (station, STA).

Alternatively, embodiments of this application are applicable to a wireless local area network, for example, an internet of things (internet of things, IoT) network or a vehicle-to-x (Vehicle-to-X, V2X) network. Certainly, embodiments of this application are alternatively applicable to another possible communication system, for example, a long term evolution (long term evolution, LTE) communication system, an LTE frequency division duplex (frequency division duplex, FDD) communication system, an LTE time division duplex (time division duplex, TDD) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future evolved communication system.

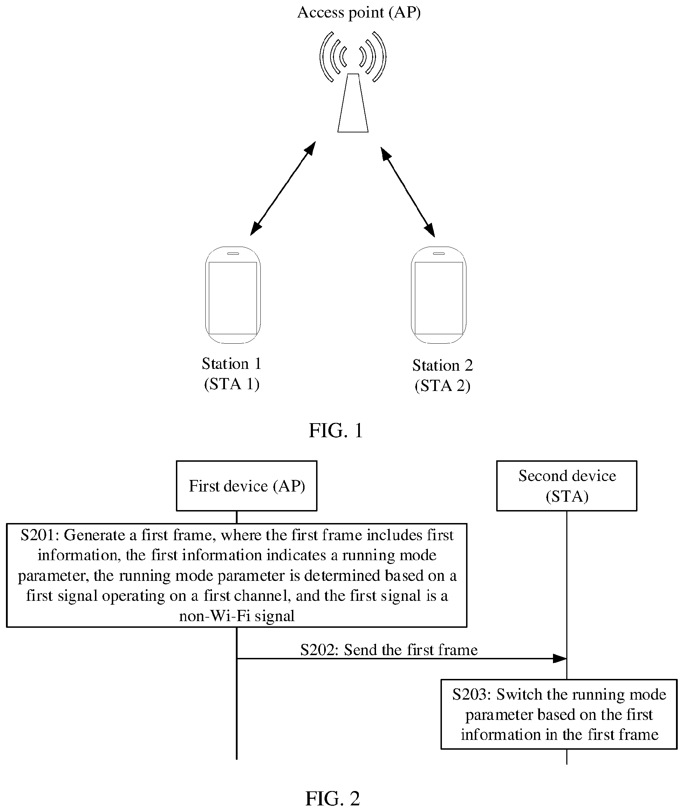

The following uses an example in which embodiments of this application are applicable to a WLAN. FIG. 1 is a diagram of a network architecture of a WLAN to which an embodiment of this application is applicable. FIG. 1 uses an example in which the WLAN includes one AP and two STAs. The STA associated with the AP can receive a radio frame sent by the AP, and can also send a radio frame to the AP. In embodiments of this application, communication between the AP and the STA is used as an example for description. It may be understood that embodiments of this application are also applicable to communication between the AP and the STA.

The AP may be an access point used by a terminal device (for example, a mobile phone) to access a wired (or wireless) network, and is mainly deployed at home, in a building, and in a park. A typical coverage radius is tens of meters to 100-odd meters. Certainly, the AP may alternatively be deployed outdoors. The AP is equivalent to a bridge that connects a wired network and a wireless network. A main function of the AP is to connect various wireless network clients together and then connect the wireless network to an ethernet. For example, the AP may be a terminal device (for example, a mobile phone) or a network device (for example, a router) with a wireless fidelity (wireless fidelity, Wi-Fi) chip. In embodiments of this application, the AP may be a device that supports the 802.11be standard, or may be a device that supports a plurality of WLAN standards of the 802.11 family such as 802.11 ax, 802.11ay, 802.11ac, 802.11n, 802.11g, 802.11b, 802.11a, and a next-generation standard of 802.11be.

The STA may be a wireless communication chip, a wireless sensor, a wireless communication terminal, or the like, and may also be referred to as a user. For example, the STA may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, and the like. Optionally, the STA may support the 802.11be standard, or may support a plurality of WLAN standards of the 802.11 family such as 802.11ax, 802.11ay, 802.11ac, 802.11n, 802.11g, 802.11b, 802.11a, and a next-generation standard of 802.11be.

It may be understood that, quantities of APs and STAs shown in FIG. 1 are merely examples, and there are more or fewer APs and STAs.

Currently, after detecting a radar signal, the AP in FIG. 1 needs to perform dynamic frequency selection, and switch an operating channel to avoid the radar signal. After performing dynamic frequency selection, the AP indicates all STAs associated with the AP to switch the operating channel. However, when the STA performs channel switching, sending of a service is interrupted until channel switching is completed. This causes problems that data transmission efficiency is low and service transmission quality cannot be ensured.

Based on this, embodiments of this application provide a channel switching method, to determine a running mode parameter by using a non-Wi-Fi signal, and improve data transmission efficiency.

The following describes in detail the channel switching method provided in embodiments of this application with reference to a specific embodiment. In the specific embodiment, an example in which the method provided in embodiments of this application is applied to the network architecture shown in FIG. 1 is used. In addition, the method may be performed by two communication apparatuses. The two communication apparatuses are, for example, a first device and a second device. The first device may be an AP or a communication apparatus that can support an AP in implementing a function required by the method. The second device may be a STA or a communication apparatus that can support a STA in implementing a function required by the method.

### Embodiments

In embodiments, an example in which the first device is an AP and the second device is a STA is used for description.

FIG. 2 is a diagram of a procedure corresponding to a channel switching method according to an embodiment of this application. As shown in FIG. 2, the procedure may include the following steps.

S201: An AP generates a first frame, where the first frame includes first information, the first information indicates a running mode parameter, the running mode parameter is determined based on a first signal operating on a first channel, and the first signal is a non-Wi-Fi signal.

In some embodiments, the non-Wi-Fi signal may be a radar signal, or may be another interference signal.

After detecting the first signal on the first channel, the AP may determine a signal class of the first signal and signal strength of the first signal.

In some embodiments, the AP may determine the signal class based on a waveform of the signal. The radar signal mainly appears as a frequency modulated signal. During implementation, when the first signal is a frequency modulated signal, and the first signal operates on a radar signal, the AP may determine that the first signal is the radar signal.

The AP may determine the running mode parameter based on the signal class, or may determine the running mode parameter based on the signal strength, or may determine the running mode parameter based on the signal class and the signal strength.

In some embodiments, the running mode parameter includes at least one parameter of a channel switch mode, a channel number, a channel bandwidth, a signal bandwidth, and a primary channel number. The channel bandwidth is a maximum bandwidth, of a channel, for sending and receiving signals.

In some embodiments, the running mode parameter is determined based on a bandwidth switching strategy. The bandwidth switching strategy may be determined based on the signal strength of the first signal, or may be determined based on the signal class of the first signal, or may be determined based on the signal class and the signal strength of the first signal.

The following separately describes a process of determining the bandwidth switching strategy in the foregoing three determining manners.

Manner 1: The AP determines the bandwidth switching strategy based on the signal class.

During implementation, the AP determines the bandwidth switching strategy based on the signal class of the first signal.

In some embodiments, the AP may determine, based on a correspondence between the signal class and the bandwidth switching strategy, that the bandwidth switching strategy includes switching a first signal bandwidth to a second signal bandwidth, the first signal bandwidth is a signal bandwidth in which the first device operates on the first channel, and the second signal bandwidth is less than the first signal bandwidth.

For example, after determining that the signal class of the first signal is the radar signal, the AP determines that the bandwidth switching strategy corresponding to the radar signal is a strategy 1. The strategy 1 may be switching an operating channel to a non-radar channel and reducing the signal bandwidth. When the signal class of the first signal is another interference signal, a bandwidth switching strategy corresponding to the another interference signal is determined as a strategy 2 based on the correspondence between the signal class and the bandwidth switching strategy. The strategy 2 may be reducing the signal bandwidth.

In some embodiments, when the bandwidth switching strategy corresponding to the signal class of the first signal cannot be determined, the AP determines that the first signal does not need to be avoided, and runs in an existing running mode.

Manner 2: The AP determines the bandwidth switching strategy based on the signal strength.

During implementation, the AP compares the signal strength of the first signal with a first threshold, and determines the bandwidth switching strategy based on a comparison result.

In some embodiments, the first threshold may be determined based on a capability indicator of a receiver. For example, the first threshold may be an LNA saturation value. In a possible implementation solution, a value range of the first threshold is greater than -50 dBm.

In this embodiment of this application, the bandwidth switching strategy is described below based on the comparison result.

Case 1: The signal strength is greater than or equal to the first threshold.

When the signal strength is greater than or equal to the first threshold, the bandwidth switching strategy includes switching a first signal bandwidth to a second signal bandwidth, and switching the first channel to a second channel. The first signal bandwidth is a signal bandwidth in which the AP operates on the first channel, the second signal bandwidth is less than the first signal bandwidth, the second channel is a non-operating channel of the first signal, and a channel bandwidth of the second channel is less than a channel bandwidth of the first channel.

During specific implementation, when the signal strength is greater than or equal to the first threshold, the AP switches the first channel to the second channel with a smaller bandwidth, and switches the first signal bandwidth to the second signal bandwidth. The AP switches the signal bandwidth to adapt to a change of the channel bandwidth while performing channel switching, so that it can be ensured that a service is not interrupted in a channel switching process.

In addition, when executing the bandwidth switching strategy, the AP may first switch the first signal bandwidth to the second signal bandwidth, and then switch the first channel to the second channel, so that it can be ensured that the AP sends a signal only on a non-radar channel.

Case 2: The channel strength is less than the first threshold.

In some embodiments, after determining that the signal strength is less than the first threshold, the AP further needs to determine whether a primary channel of the AP is an operating channel of the first signal.

When the signal strength is less than the first threshold, and the primary channel of the AP is a non-operating channel of the first signal, the bandwidth switching strategy includes switching a first signal bandwidth to a second signal bandwidth.

In some embodiments, when the signal strength is less than the first threshold, and a primary channel of the AP is a non-operating channel, the AP executes the bandwidth switching strategy, and switches the first signal bandwidth to the second signal bandwidth, so that it can be determined that the AP sends a signal only on the non-operating channel without interrupting a current service.

When the signal strength is less than the first threshold, and the primary channel of the AP is an operating channel of the first signal, the bandwidth switching strategy includes switching a first signal bandwidth to a second signal bandwidth, and switching a frequency or a channel number of the primary channel to that of a non-operating channel of the first signal.

In some embodiments, when the signal strength is less than the first threshold, and a primary channel of the AP is an operating channel of the first signal, the AP executes the bandwidth switching strategy, switches the primary channel to a non-operating channel of the first signal, and switches a first signal bandwidth to a second signal bandwidth, so that it can be ensured that the AP sends a signal only on the non-operating channel without interrupting a current service.

In some embodiments, after determining the bandwidth switching strategy, the AP may determine the running mode parameter according to the bandwidth switching strategy. Then, the AP may switch a running mode based on the running mode parameter. A parameter value in the running mode parameter is a parameter value obtained after switching in the bandwidth switching strategy.

For example, when the bandwidth switching strategy is switching the first signal bandwidth to the second signal bandwidth, the running mode parameter includes the second signal bandwidth.

In some embodiments, after detecting the first signal, the AP further needs to indicate all associated STAs to switch the running mode while switching the running mode. For example, when the AP detects the radar signal, the AP further needs to indicate all the associated STAs to perform channel switching while performing channel switching.

After obtaining the running mode parameter, the AP determines the first information including the running mode parameter, and generates the first frame based on the first information.

In some embodiments, the first information includes channel switch announcement (channel switch announcement, CSA) information or extended channel switch announcement information.

The extended channel switch announcement information is an extension of a meaning of a spectrum management action (spectrum management action) field of a CSA element in the 802.11 protocol.

In some embodiments, the CSA information includes a channel switch mode and a channel number. The extended channel switch announcement information includes at least one of a channel switch mode, a channel number, a signal bandwidth, and a primary channel number.

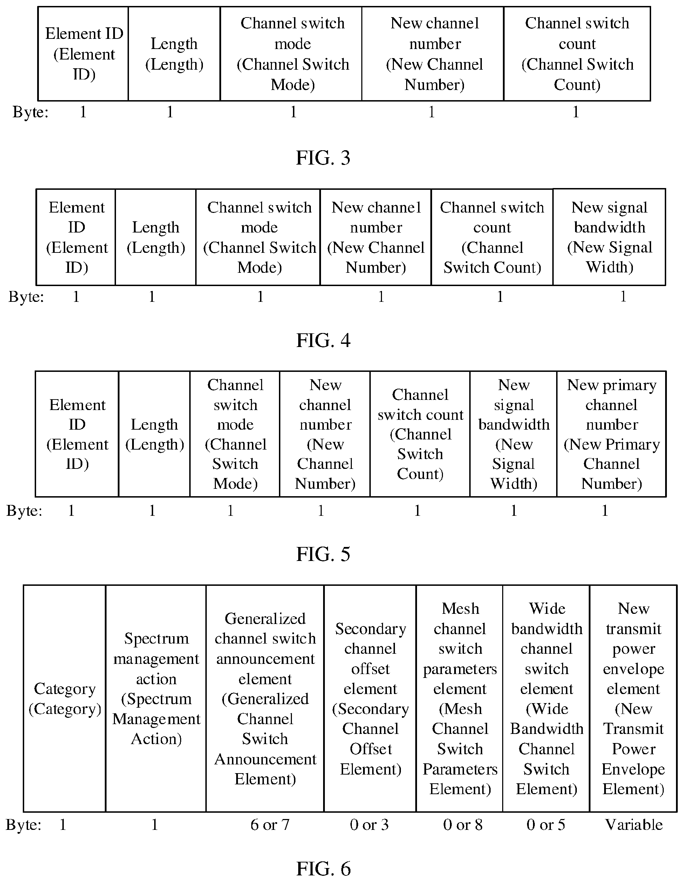

When the first information includes the CSA information, the first information is a CSA element. As shown in FIG. 3, the CSA element includes an element ID (element ID), a length (length), a channel switch mode (channel switch mode), a new channel number (new channel number), and a channel switch count (channel switch count). The channel switch mode field indicates the switching strategy of the AP and the STA, the new channel number indicates the AP and the STA to switch to a new channel, and the channel switch count indicates a quantity of times of channel switching of the AP and the STA.

When the first information includes the extended channel switch announcement information, the first information is a generalized channel switch announcement (generalized channel switch announcement, GCSA) element. A format of the GCSA element may be 6 bytes, or may be 7 bytes.

In some embodiments, when the format of the GCSA element is 6 bytes, as shown in FIG. 4, the GCSA element includes an element ID, a length, a channel switch mode, a new channel number, a channel switch count, and a new signal bandwidth (new signal width).

In some embodiments, the AP generates, according to the bandwidth switching strategy, the GCSA element including the running mode parameter. For example, when the bandwidth switching strategy is switching the first signal bandwidth to the second signal bandwidth, the AP sets the channel switch mode to 2 (that is, 00000010), and sets the new signal bandwidth to the second signal bandwidth. When the bandwidth switching strategy is switching the first signal bandwidth to the second signal bandwidth, and switching the primary channel to the non-operating channel of the first signal, the new channel number in the GCSA element indicates a channel number of a channel occupied by the new signal bandwidth, and the non-operating channel of the first signal on the channel is the primary channel.

For example, meanings of some fields in the GCSA element are shown in Table 1 below:

**Table 1: Meanings of some fields in a GCSA element**

| Channel switch mode | | New signal bandwidth | | New channel number |
|---|---|---|---|---|
| Value | Meaning | Value | Meaning | Meaning |
| 0 | No channel switching | 0 | Reserved | New channel after switching |
| 1 | Channel switching | | | |
| 2 | No channel bandwidth switching | 1 | Signal bandwidth: 20 MHz | indicates a channel number of a channel occupied by the new signal bandwidth |
| | Signal bandwidth switching | 2 | Signal bandwidth: 40 MHz | |
| | No primary channel switching | 3 | Signal bandwidth: 80 MHz | |
| 6 | No channel bandwidth switching | 1 | Signal bandwidth: 20 MHz | indicates a new channel number of a channel occupied by the new signal bandwidth, where a low 20 MHz channel is the primary 20 MHz channel |
| | Signal bandwidth switching | 2 | Signal bandwidth: 40 MHz | |
| | Primary 20 MHz channel switching | 3 | Signal bandwidth: 80 MHz | |
| Others | Reserved | Others | Reserved | New channel after switching |

In some embodiments, when the format of the GCSA element is 7 bytes, as shown in FIG. 5, the GCSA element includes an element ID, a length, a channel switch mode, a new channel number, a new signal bandwidth, a channel switch count, and a new primary channel number (new primary channel number).

In some embodiments, when the bandwidth switching strategy is switching the first signal bandwidth to the second signal bandwidth and switching the primary channel to the non-operating channel of the first signal, the new channel number in the GCSA element indicates a channel number of a channel occupied by the new signal bandwidth, and the new primary channel number indicates that the non-operating channel is the primary channel.

For example, a value and a meaning of the signal bandwidth field need to be adjusted based on an available frequency band, of a Wi-Fi device, that is specified in the regulations. Herein, a 5 GHz frequency band in China is used as an example, and meanings of some fields in the GCSA element are shown in Table 2 below.

**Table 2: Meanings of some fields in a GCSA element**

| Channel switch mode | | New signal bandwidth | | New channel number | New primary channel number |
|---|---|---|---|---|---|
| Value | Meaning | Value | Meaning | Meaning | Meaning |
| 0 | No channel switching | 0 | Reserved | New channel after switching | Reserved |
| 1 | Channel switching | | | | |
| 2 | No channel bandwidth switching | 1 | Signal bandwidth: 20 MHz | indicates a channel number of a channel occupied by the new signal bandwidth | Reserved |
| | | 2 | Signal bandwidth: 40 MHz | | |
| | Signal bandwidth switching | | | | |
| | | 3 | Signal bandwidth: 80 MHz | | |
| | No primary channel switching | | | | |
| 6 | No channel bandwidth switching | 1 | Signal bandwidth: 20 MHz | | indicates the new primary channel number |
| | | 2 | Signal bandwidth: 40 MHz | | |
| | Signal bandwidth switching | | | | |
| | | 3 | Signal bandwidth: 80 MHz | | |
| | Primary channel switching | | | | |
| Others | Reserved | Others | Reserved | New channel after switching | Reserved |

After obtaining the first information, the AP generates the first frame. The first frame may be a beacon frame or a probe response frame.

In some embodiments, when the first information is a CSA element, the first frame may also be a CSA frame. When the first information is a GCSA element, the first frame may also be a GCSA frame.

In this embodiment of this application, a value of a spectrum management action in the CSA may be defined as 5, and the frame is a spectrum management frame GCSA. A frame format of the GCSA frame is shown in FIG. 6. The GCSA frame includes a category (category), a spectrum management action (spectrum management action), a GCSA element, a secondary channel offset element (secondary channel offset element), a mesh channel switch parameters element (mesh channel switch parameters element), a wide bandwidth channel switch element (wide bandwidth channel switch element), and a new transmit power envelope element (new transmit power envelope element).

In some embodiments, the AP may further avoid the first signal by using the preamble puncturing (preamble puncturing) technology. Specifically, the AP may generate the first frame based on the preamble puncturing technology, so that the AP and the STA avoid transmitting the signal on the first channel, and the non-Wi-Fi signal can be avoided.

In this embodiment of this application, in a solution of avoiding the first signal based on preamble puncturing, the primary channel of the AP cannot be punctured (Punctured). The AP needs to switch the primary channel of the AP to the non-operating channel of the non-Wi-Fi signal. Then, the AP punctures the operating channel of the non-Wi-Fi signal, to prevent the AP and the STA from transmitting data on the operating channel of the non-Wi-Fi signal.

The first frame generated by the AP based on the preamble puncturing technology includes the following types:
Type 1: The first frame includes a high efficiency physical layer (high efficiency physical layer, HE PHY) capabilities information field (Capabilities Information field). In addition, the first frame further includes the CSA element or the GCSA element.

In some embodiments, the HE PHY capabilities information field includes a punctured preamble Rx field (Punctured Preamble Rx field). The punctured preamble Rx field indicates a preamble puncturing pattern (Preamble Puncturing Pattern). Content of the punctured preamble Rx field is consistent with that in the existing protocol, so that the AP and the STA can avoid transmitting the signal on the first channel.

In addition, the CSA element or the GCSA element in the first frame is for notifying switching start time, a signal bandwidth, a primary channel number, and the like. A format of the CSA element is shown in FIG. 3, and a format of the GCSA is shown in FIG. 4.

The AP may generate the first frame shown in Type 1, to avoid a radar signal, and notify the STA of channel switching information such as the switching start time, the signal bandwidth, and the primary channel number by using the CSA element or the GCSA element.

Type 2: The first frame includes the CSA element or the GCSA element. The CSA element or the GCSA element includes a punctured preamble Rx field (field). A definition of the punctured preamble Rx field (field) is the same as that in the existing protocol.

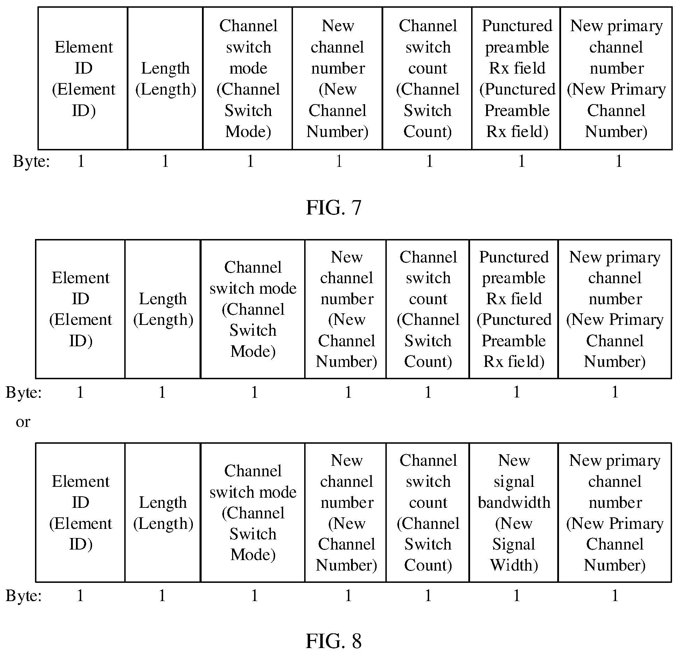

In some embodiments, as shown in FIG. 7, an embodiment of this application provides a format of the GCSA element. The GCSA element includes the punctured preamble Rx field (field).

Type 3: The first frame includes the CSA element or the GCSA element, where the CSA element or the GCSA element includes a punctured preamble Rx field (field) or a new signal bandwidth field. A format of the GCSA element is shown in FIG. 8.

In some embodiments, each bit of the punctured preamble Rx field (field) or the signal bandwidth field correspondingly indicates whether data is transmitted on each subchannel, and a channel bandwidth of the subchannel depends on a resolution.

In a possible implementation, the AP and the STA preconfigure the resolution. For example, it is specified in a protocol that different channel bandwidths correspond to different resolutions. A 160 MHz channel bandwidth is used as an example. A length of the punctured preamble Rx field or the signal bandwidth field is 1 byte, which includes 8 bits, and each bit correspondingly indicates one 20 MHz subchannel of the 160 MHz channel bandwidth. When the bit is set to 0, it indicates that no data is transmitted on the subchannel corresponding to the bit; or when the bit is set to 1, it indicates that data is transmitted on the subchannel corresponding to the bit.

In some embodiments, the first frame further includes third information, and the third information indicates the resolution of the punctured preamble Rx field (field) or the new signal bandwidth field, namely, the channel bandwidth of the subchannel corresponding to each bit. The AP may further correspond to a quantity of bytes of an extended punctured preamble Rx field (field) or a signal bandwidth field based on the channel bandwidth of data transmission, and a bit of a non-corresponding subchannel is reserved.

S202: The AP sends the first frame to the STA.

During implementation, the AP may send the first frame including the first information to the STA, to indicate the STA to switch the running mode.

In some embodiments, the AP may send, to all associated STAs in a broadcast manner, the first frame that carries the first information, so that the STAs switch the running mode parameter, for example, the channel bandwidth, the signal bandwidth, or the primary channel number. The first information may be a GCSA element, or may be a CSA element. The first frame may be a CSA frame, a GCSA frame, a beacon frame, or a probe response frame.

Specifically, the AP may send, to all the associated STAs in a broadcast manner, the beacon frame or the probe response frame that carries the CSA element or the GCSA element, to indicate the STAs to switch the running mode. The AP may further send, to all the associated STAs in a broadcast manner, the CSA frame, the beacon frame, or the probe response frame that carries the CSA element, or send the GCSA frame, the beacon frame, or the probe response frame that carries the GCSA element.

In some embodiments, the AP may alternatively send, to all associated STAs in turn in a unicast manner, the first frame that carries the first information, to indicate the STAs to switch the running mode parameter.

Specifically, the AP may send, to all the STAs in a unicast manner, a beacon frame, a probe response frame, or a CSA frame that carries a CSA element, or send a beacon frame, a probe response frame, or a GCSA frame that carries a GCSA element.

In some embodiments, the AP may further send the first frame including the third information to the STA, to indicate the STA to switch the running mode. A sending manner in which the AP sends the first frame including the third information is the same as the foregoing sending manner in which the AP sends the first frame including the first information. Details are not described herein again.

S203: After receiving the first frame, the STA switches the running mode parameter based on the first information in the first frame. For example, the STA may switch the channel bandwidth, the signal bandwidth, or the primary channel based on the first information.

In this embodiment of this application, after sending the first frame, the AP continuously monitors a second signal on the first channel, where the second signal is the non-Wi-Fi signal. In some embodiments, the first signal and the second signal may be radar signals.

In some embodiments, the AP may continuously monitor the second signal through adjacent channel interference detection or power spectrum density detection, to determine signal strength of the second signal.

The AP may determine a bandwidth recovery strategy based on the signal strength of the first signal, where the bandwidth recovery strategy is for switching the bandwidth of the AP and the STA to a large bandwidth.

In some embodiments, when the signal strength of the second signal is less than a second threshold, the bandwidth recovery strategy is switching a third channel to a fourth channel, where the third channel is a channel on which the AP currently operates, and a channel bandwidth of the fourth channel is greater than a channel bandwidth of the third channel.

When the signal strength of the second signal is less than the second threshold, only the channel is switched to increase the bandwidth of the channel on which the AP operates, and the signal bandwidth remains unchanged, so that the AP sends the signal only on the non-operating channel of the second signal.

In some embodiments, the third channel may be the first channel, or may be the second channel, or may be another channel.

After switching the third channel to the fourth channel according to the bandwidth recovery strategy, the AP may further continue to monitor the second signal on the first channel through mode matching or the like.

When the second signal is not detected, the AP calculates duration in which the second signal is not continuously detected. When the duration reaches specified time, the AP determines that the bandwidth recovery strategy is switching a second signal bandwidth to a third signal bandwidth, where the third signal bandwidth is greater than the second signal bandwidth.

For example, the specified time is 60 seconds. When the AP determines that the duration in which the second signal is not detected is 61 seconds, which is greater than specified time, the bandwidth recovery strategy is switching the second signal bandwidth to the third signal bandwidth.

In this embodiment of this application, after avoiding the non-Wi-Fi signal, the AP continuously monitors the non-Wi-Fi signal. After determining that the signal strength of the non-Wi-Fi signal is less than the second threshold, the AP switches the third channel to the fourth channel. This increases the channel bandwidth, provides a channel basis for subsequently increasing the signal bandwidth, and can avoid service interruption in the channel switching process. When the duration is greater than the specified time, the AP switches the second signal bandwidth to the third signal bandwidth, to improve a throughput, so that data transmission efficiency can be improved.

In some embodiments, after obtaining the bandwidth recovery strategy, the AP determines the second information according to the bandwidth recovery strategy, where the second information indicates the signal bandwidth or the channel bandwidth.

In some embodiments, the second information may include CSA information or extended channel switch announcement information. Specifically, the second information may be a CSA element, or may be a GCSA element.

The AP generates a second frame that carries the second information, and sends the second frame to the STA, where the second frame may be a CSA frame, a GCSA frame, a beacon frame, or a probe response frame.

In some embodiments, the AP may send, in a broadcast manner, the second frame to all associated STAs, to indicate the STAs to switch the channel bandwidth or the signal bandwidth.

In some embodiments, the AP may alternatively send, in a unicast manner, the second frame to all associated STAs in turn, to indicate the STAs to switch the channel bandwidth or the signal bandwidth.

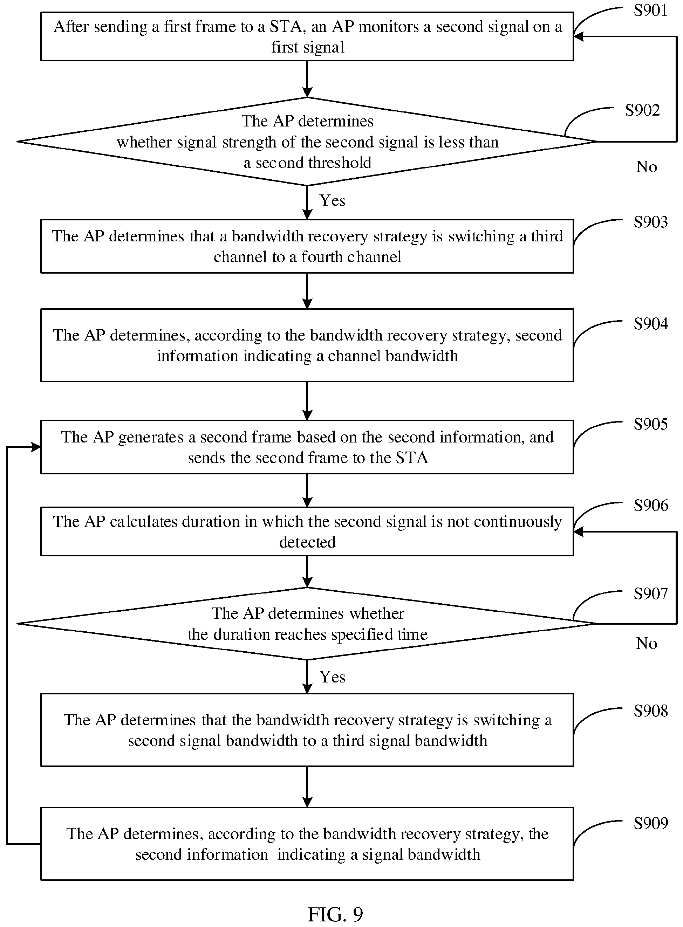

According to the foregoing embodiment, an embodiment of this application provides a bandwidth recovery method. As shown in FIG. 9, the method includes the following steps.

S901: After sending a first frame to a STA, an AP monitors a second signal on a first signal, where the second signal is a non-Wi-Fi signal.

S902: The AP determines whether signal strength of the second signal is less than a second threshold; and if the signal strength of the second signal is less than the second threshold, performs S903; or if the signal strength of the second signal is not less than the second threshold, performs S901.

S903: The AP determines that a bandwidth recovery strategy is switching a third channel to a fourth channel, where the third channel is a channel on which the AP currently operates, and a channel bandwidth of the fourth channel is greater than a channel bandwidth of the third channel.

S904: The AP determines, according to the bandwidth recovery strategy, second information indicating a channel bandwidth.

S905: The AP generates a second frame based on the second information, and sends the second frame to the STA.

S906: The AP calculates duration in which the second signal is not continuously detected.

S907: The AP determines whether the duration reaches specified time; and if the duration reaches the specified time, continues to perform S908; or if the duration does not reach the specified time, performs S906.

S908: The AP determines that the bandwidth recovery strategy is switching a second signal bandwidth to a third signal bandwidth, where the second signal bandwidth is less than the third signal bandwidth.

S909: The AP determines, according to the bandwidth recovery strategy, the second information indicating a signal bandwidth.

Based on content shown in FIG. 9, when detecting that the signal strength of the second signal is less than the second threshold, the AP switches only the channel bandwidth to a large channel bandwidth, so that it can be ensured that the signal is transmitted on a non-operating channel of the second signal. In addition, when the duration in which the second signal is not continuously detected reaches the specified time, the AP switches the signal bandwidth to a large signal bandwidth, so that it can be ensured that a service is not interrupted in a channel switching process, and data transmission efficiency can be further improved.

According to the foregoing embodiment, an embodiment of this application provides a scenario of radar signal avoidance and channel bandwidth recovery. A 5 GHz unlicensed frequency band (5170 to 5330) is used as an example. A maximum available channel bandwidth of a Wi-Fi device is 160 MHz, and high 80 MHz (5250 to 5330) is a radar channel, that is, the Wi-Fi device may detect a radar signal on the high 80 MHz channel.

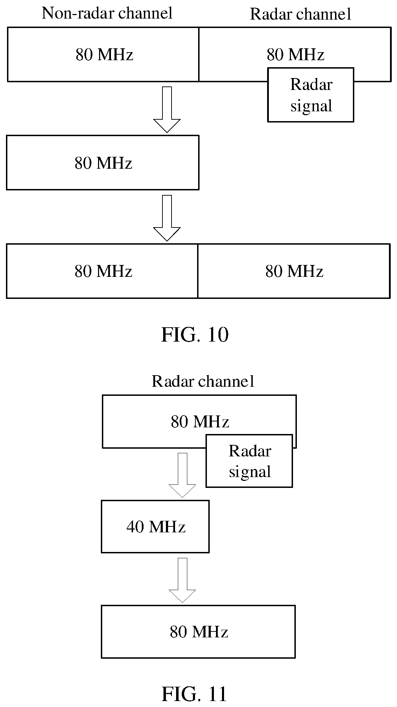

As shown in FIG. 10, an operating channel of the AP includes a radar channel and a non-radar channel. After the AP detects the radar signal on the radar channel, the AP may determine the bandwidth switching strategy based on channel strength of the radar signal and switch the channel, or may use preamble puncturing to avoid the radar signal and switch the operating channel of the AP and the STA to an 80 MHz non-radar channel. When the AP detects that the radar signal on the radar channel is weakened or disappears, the AP determines the bandwidth recovery strategy, to recover the channel bandwidth or the signal bandwidth. When the AP determines that the radar signal disappears or the radar detection is correctly reported, the AP transmits the data on the channel with the channel bandwidth of 160 MHz.

As shown in FIG. 11, an operating channel of the AP includes only a radar channel. When the AP detects a radar signal or a radar false alarm occurs, the AP may determine the bandwidth switching strategy based on channel strength of the radar signal and switch the channel, or may use preamble puncturing to avoid the radar signal and switch the operating channel of the AP and the STA from an 80 MHz radar channel to a 40 MHz radar channel. When the AP detects that the radar signal on the radar channel is weakened or disappears, the AP determines the bandwidth recovery strategy, to recover the channel bandwidth or the signal bandwidth. When the AP determines that the radar signal disappears or the radar detection is correctly reported, the AP transmits the data on the radar channel with the channel bandwidth of 80 MHz.

The foregoing mainly describes the solutions provided in embodiments of this application from a perspective of the first device. It may be understood that, to implement the foregoing functions, the first device may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

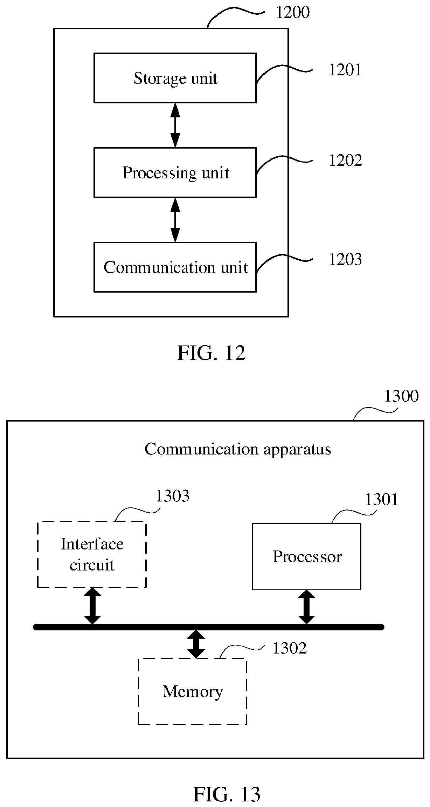

FIG. 12 is a possible example block diagram of an apparatus according to an embodiment of this application. As shown in FIG. 12, the apparatus 1200 may include a processing unit 1202 and a communication unit 1203. The processing unit 1202 is configured to control and manage an action of the apparatus 1200. The communication unit 1203 is configured to support the apparatus 1200 in communicating with another device. Optionally, the communication unit 1203 is also referred to as a transceiver unit, and may include a receiving unit and/or a sending unit, and the receiving unit and the sending unit are respectively configured to perform a receiving operation and a sending operation. The apparatus 1200 may further include a storage unit 1201, configured to store program code and/or data of the apparatus 1200.

The apparatus 1200 may be the first device (for example, an AP) in the foregoing embodiments, or may be a component (for example, a circuit or a chip) disposed in the AP. The processing unit 1202 may support the apparatus 1200 in performing actions of the AP in the foregoing method examples. Alternatively, the processing unit 1202 mainly performs internal actions of the AP in the method examples, and the communication unit 1203 may support communication between the apparatus 1200 and another device.

For example, in an embodiment, the communication unit 1203 is configured to send a first frame and a second frame to a second device.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 13 is a diagram of a structure of a communication apparatus according to an embodiment of this application. The communication apparatus is configured to implement operations of the first device (for example, an AP) in the foregoing embodiments.

As shown in FIG. 13, the communication apparatus 1300 may include a processor 1301, a memory 1302, and an interface circuit 1303. The processor 1301 may be configured to process a communication protocol and communication data, and control the communication apparatus 1300. The memory 1302 may be configured to store a program and data, and the processor 1301 may perform, based on the program, the method performed by the AP in embodiments of this application. The interface circuit 1303 may be used by the communication apparatus 1300 to communicate with another device. The communication may be wired communication or wireless communication. The interface circuit may also be replaced with a transceiver.

Alternatively, the memory 1302 may be externally connected to the communication apparatus 1300. In this case, the communication apparatus 1300 may include the interface circuit 1303 and the processor 1301. Alternatively, the interface circuit 1303 may be externally connected to the communication apparatus 1300. In this case, the communication apparatus 1300 may include the memory 1302 and the processor 1301. When both the interface circuit 1303 and the memory 1302 are externally connected to the communication apparatus 1300, the communication apparatus 1300 may include the processor 1301.

The communication apparatus shown in FIG. 13 can implement processes related to the AP in the foregoing method embodiments. Operations and/or functions of the modules in the communication apparatus shown in FIG. 13 are respectively used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this case, this application is intended to cover these modifications and variations of this application provided that they fall within the scope of protection defined by the claims of this application and their equivalent technologies.

## Claims

1. A channel switching method, wherein the method comprises:
generating, by a first device, a first frame, wherein the first frame comprises first information, the first information indicates the running mode parameter, the running mode parameter is determined based on a first signal operating on a first channel, and the first signal is a non-Wi-Fi signal; and
sending, by the first device, the first frame to a second device.

2. The method according to claim 1, wherein the running mode parameter is determined based on a bandwidth switching strategy, and the bandwidth switching strategy is determined based on signal strength of the first signal.

3. The method according to claim 1 or 2, wherein the running mode parameter comprises at least one parameter of a channel switch mode, a channel number, a channel bandwidth, a signal bandwidth, and a primary channel number.

4. The method according to either of claims 2 and 3, wherein the bandwidth switching strategy comprises switching a first signal bandwidth to a second signal bandwidth, the first signal bandwidth is a signal bandwidth in which the first device operates on the first channel, and the second signal bandwidth is less than the first signal bandwidth.

5. The method according to any one of claims 2 to 4, wherein the method further comprises:
when the signal strength is greater than or equal to a first threshold, the bandwidth switching strategy further comprises switching the first channel to a second channel, the second channel is a non-operating channel of the first signal, and a channel bandwidth of the second channel is less than a channel bandwidth of the first channel.

6. The method according to any one of claims 2 to 4, wherein the method further comprises:
when the signal strength is less than a first threshold, and a primary channel of the first device is an operating channel of the first signal, the bandwidth switching strategy further comprises switching a frequency or a channel number of the primary channel to that of a non-operating channel of the first signal.

7. The method according to any one of claims 1 to 6, wherein the sending, by the first device, the first frame to a second device comprises:
sending, by the first device, the first frame to the second device in a unicast manner or a broadcast manner.

8. The method according to any one of claims 1 to 7, wherein after the sending the first frame to the second device, the method further comprises:
generating, by the first device, a second frame, wherein the second frame comprises second information, the second information indicates the signal bandwidth or the channel bandwidth, the second information is determined based on a bandwidth recovery strategy, the bandwidth recovery strategy is determined based on signal strength of a second signal operating on the first channel, and the second signal is the non-Wi-Fi signal; and
sending, by the first device, the second frame to the second device.

9. The method according to claim 8, wherein the method further comprises:
when the signal strength of the second signal is less than a second threshold, the bandwidth recovery strategy is switching a third channel to a fourth channel, the third channel is a channel on which the first device currently operates, and a channel bandwidth of the fourth channel is greater than a channel bandwidth of the third channel.

10. The method according to claim 9, wherein the method further comprises:
when duration reaches specified time, the bandwidth recovery strategy is switching the second signal bandwidth to a third signal bandwidth, the duration is time that is calculated by the first device and in which the second signal is not continuously detected, and the second signal bandwidth is less than the third signal bandwidth.

11. The method according to any one of claims 1 to 10, wherein the first information and the second information comprise channel switch announcement CSA information or extended channel switch announcement information.

12. The method according to any one of claims 1 to 11, wherein the first device is an access point AP, and the non-Wi-Fi signal is a radar signal.

13. A communication apparatus, comprising a processor, wherein the processor is coupled to a memory, the memory stores a computer program, and the processor is configured to invoke the computer program in the memory, to enable the communication apparatus to perform the method according to any one of claims 1 to 12.

14. A computer-readable storage medium, wherein the storage medium stores a computer program or instructions; and when the computer program or the instructions are executed by a computer, the method according to any one of claims 1 to 12 is implemented.

15. A computer program product, wherein when a computer reads and executes the computer program product, the computer is enabled to perform the method according to any one of claims 1 to 12.
